# EUROPEAN PATENT APPLICATION

(11) **EP 1 045 192 A2**
(43) Date of publication of application: **18.10.2000**
(21) Application number: 00650035.9
(22) Date of filing: 17.04.2000
(51) Int. Cl.: F16M 13/02

(54) **A bottle holder**

(30) Priority: 16.04.1999 IE 990320
(71) Applicant: TEE ENTERPRISES LIMITED, Bettystown, County Meath (IE)
(72) Inventor: McKenna, Maurice, Bettystown, County Meath (IR)
(74) Representative: Schütte, Gearoid

(57) **Abstract**

A bottle holder (1) comprises a cradle (2) having means for releasably holding a bottle (3) on the cradle (2) in a position ready for pick-up by a user and means for mounting the cradle (2) on a support surface such as a wall. A security cable (4) extends between the cradle (2) and bottle (3) to securely attach the bottle (3) to the cradle (2). The cable (4) is of coiled construction to allow extension and has an inner end (25) attached to the cradle (2). An outer end (26) of the cable (4) is secured to an attachment cup (27) which engages a bottom of the bottle (3).

## Description

### Technical Field

This invention relates to a bottle holder for mounting a spray bottle containing cosmetic liquid on a support surface.

### Background of the Invention

In our previous Patent Application No. EP 97113796.3, we have disclosed a number of different carriers for spray bottles of the type comprising a bottle with a discharge pump mounted on the bottle for discharging the liquid contents of the bottle through an atomising nozzle at a top of the bottle. The carriers essentially comprise a wall mounted housing within which the bottle is mounted with the discharge nozzle of the bottle aligning with an opening in the housing. An operating button on the housing can be pressed by a user to actuate the pump on the bottle to discharge an atomised spray of liquid from the dispensing nozzle at the top of the bottle as required. One drawback of these carriers is the fact that the bottle is fixed on the carrier so that a user has to try to position his or her head correctly relative to the nozzle and this is not always easy to do particularly when spraying onto a side of the face. It may also be somewhat awkward for persons of different heights wishing to use the atomiser.

The present invention is directed towards overcoming these problems.

### Summary of the Invention

According to the invention there is provided a bottle holder for mounting a liquid spray bottle on a support surface, the holder including a cradle having means for releasably holding the bottle on the cradle in a position ready for pick-up by a user, and means for mounting the cradle on a support surface. In a particularly preferred embodiment, the spray bottle contains a cosmetic liquid. The term "cosmetic liquid" used in this patent specification is taken to include fresh water, toilet water, liquid perfumes, scents and fragrances and the like. It will be appreciated that the invention provides a holder for holding the spray bottle in a position ready for use and can be conveniently mounted on a wall or other support surface.

In a preferred embodiment the bottle holder has an elongate flexible security cable having an inner end and an outer end, the inner end being connected to the cradle and the outer end having means for attachment of the security cable to the bottle. The term "cable" as used herein is taken to include cables, wires, ties, cords, chains and the like, flexible connectors which attach the bottle to the carrier but allow full freedom of movement for a user to manipulate the bottle for spraying the liquid from the bottle. So one has the advantage of being able to hold the bottle and direct the spray as required in a simple and convenient manner while at the same time the user is obliged to return the bottle to the cradle after use of the bottle.

In one embodiment of the invention, the cradle has a body with an outwardly open recess in a front of the body for reception and support of a spray bottle in a generally upright position, said recess having arcuate sides for wrapping about the spray bottle, a step being provided at a bottom of the recess upon which the spray bottle stands when engaged with the cradle.

Conveniently the attachment means is a cup connected to the cable, the cup having a base with an upstanding side wall defining a recess for reception of a bottom of the bottle, the cup having locking means for releasably securing the bottle in engagement with the cup. Preferably the locking means is operable to clamp the bottle within the cup.

In a particularly preferred embodiment the cup is sized such that it is a push fit into engagement with the bottle to clamp the bottle in the cup. To allow interengagement of the bottle and the cup the bottle and/or the cup are deformable for interengagement.

In a further embodiment the bottle holder is for mounting on a wall or other upright surface, and comprises a body having a rear face which is engageable with the wall, the body having an outwardly open recess in a front of the body for reception and support of the bottle in a generally upright position.

Preferably the recess is shaped to support the bottle in an inclined position within the recess, the base of the bottle being supported outwardly of the top of the bottle to assist in retaining the bottle securely within the recess.

In another embodiment complementary releasably interengageable formations are provided on the cup and within the recess for retaining the cup within the recess.

Conveniently the interengageable formations comprise a key on one of the cup or body and an associated slot in the other of the cup or body. Preferably the key is mounted on the cup and the slot is provided at a bottom of the recess in the body. In addition to securing the cup and bottle within the recess the interengageable formations may be used to position the bottle in a desired orientation within the recess. Thus for example the bottle may be positioned in a such a position that when it is picked out of the recess the user will be holding the bottle in the correct spraying position. Further the labelling on the bottle may be such that when the bottle is mounted in the recess the suppliers name is clearly displayed for advertising purposes.

In another embodiment the recess is of arcuate section to wrap about the bottle with side walls of the recess extending outwardly about the sides of the bottle, finger notches being provided in opposite side walls of the recess to facilitate gripping the bottle when it is mounted within the recess. This construction aids in securing the bottle within the recess while at the same time allowing a user to easily pick the bottle out of the recess.

In a further embodiment, the cradle has a body with a pair of spaced-apart forwardly extending arms defining an outwardly open recess in a front of the body for reception and support of a liquid spray bottle in a generally upright position, the arms for wrapping about the spray bottle, and an upwardly extending step beneath the arms upon which the spray bottle stands when engaged with the cradle. Preferably, the arms are resiliently deformable to grip a spray bottle therebetween. Ideally, an outer edge of each arm is flared outwardly for guiding a spray bottle into engagement between the arms.

### Brief Description of the Drawings

The invention will be more clearly understood by the following description of an embodiment thereof, given by way of example only, with reference to the accompanying drawings, in which:-
Fig. 1 is a perspective view of a bottle holder according to the invention;
Fig. 2 is an elevational view of the bottle holder;
Fig. 3 is a side elevational view of the bottle holder;
Fig. 4 is a plan view of the bottle holder;
Fig. 5 is a perspective view of a cradle portion of the bottle holder;
Fig. 6 is an elevational view of the cradle;
Fig. 7 is a side elevational view of the cradle;
Fig. 8 is a sectional view taken along the line VIII-VIII of Fig. 6;
Fig. 9 is a perspective view of a bottle gripping cup forming portion of the bottle holder;
Fig. 10 is an elevational view of the cup;
Fig. 11 is a sectional view taken along the line XI-XI of Fig. 10;
Fig. 12 is a plan view of the cup;
Fig. 13 is a detail sectional view of portion of the cup;
Fig. 14 is another detail sectional view showing a rim portion of the cup;
Fig. 15 is a perspective view of another bottle holder according to a second embodiment of the invention;
Fig. 16 is a detail perspective view of portion of the bottle holder;
Fig. 17 is a perspective view of the bottle holder, shown in-use with a spray bottle mounted thereon;
Fig. 18 is a side elevational view of the bottle holder shown in-use; and
Fig. 19 is an underneath perspective view of the bottle holder shown in-use.

### Detailed Description of Preferred Embodiments

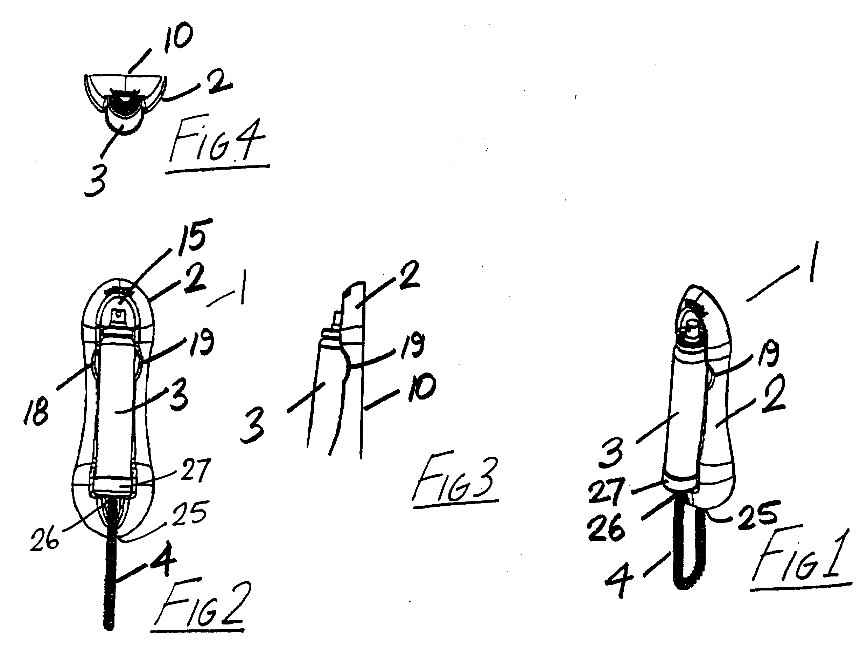

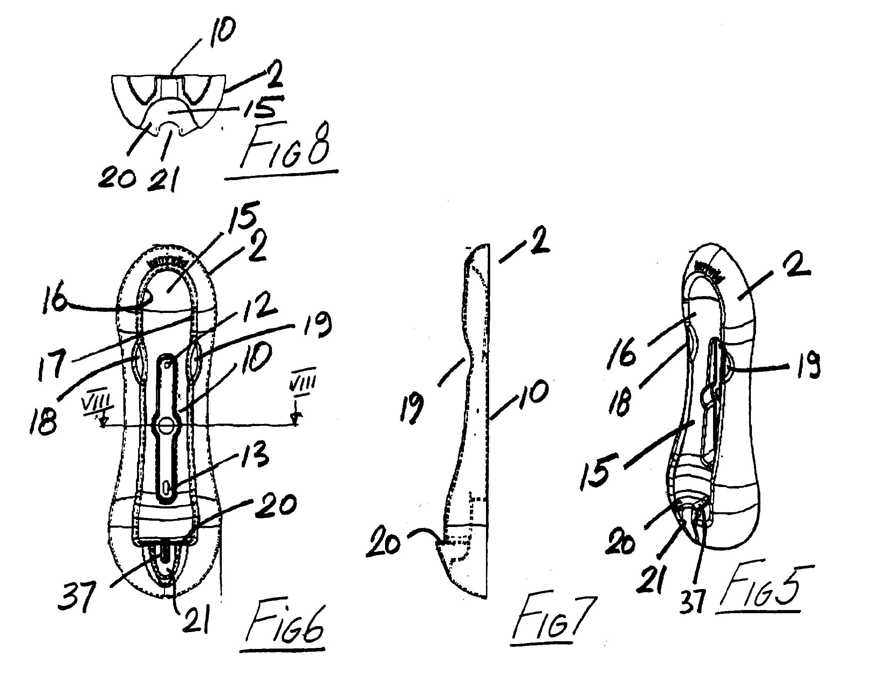

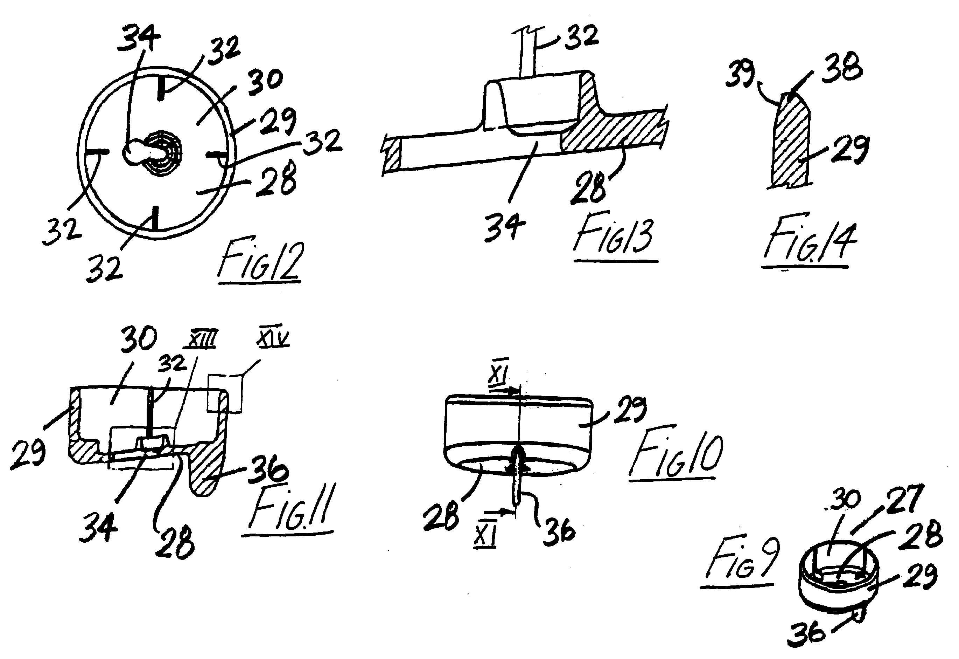

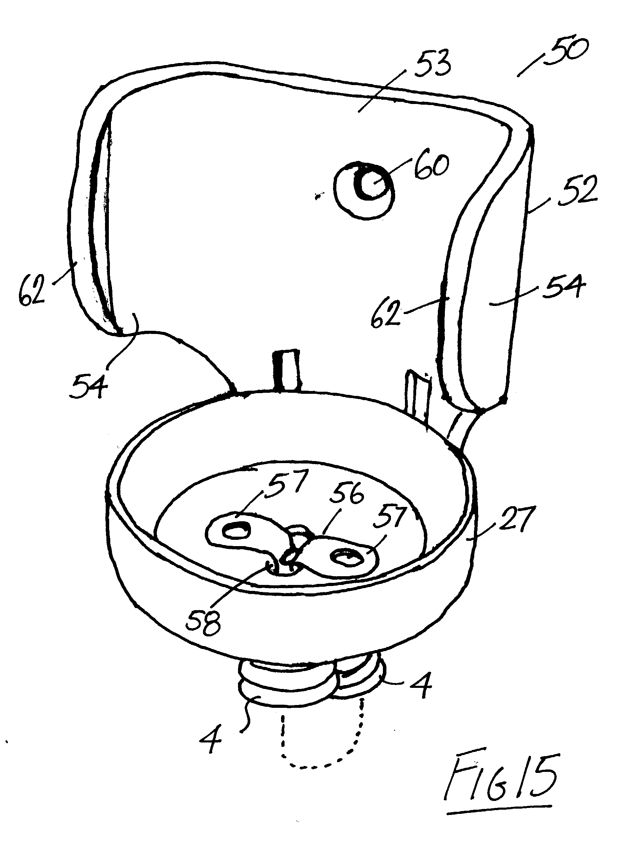

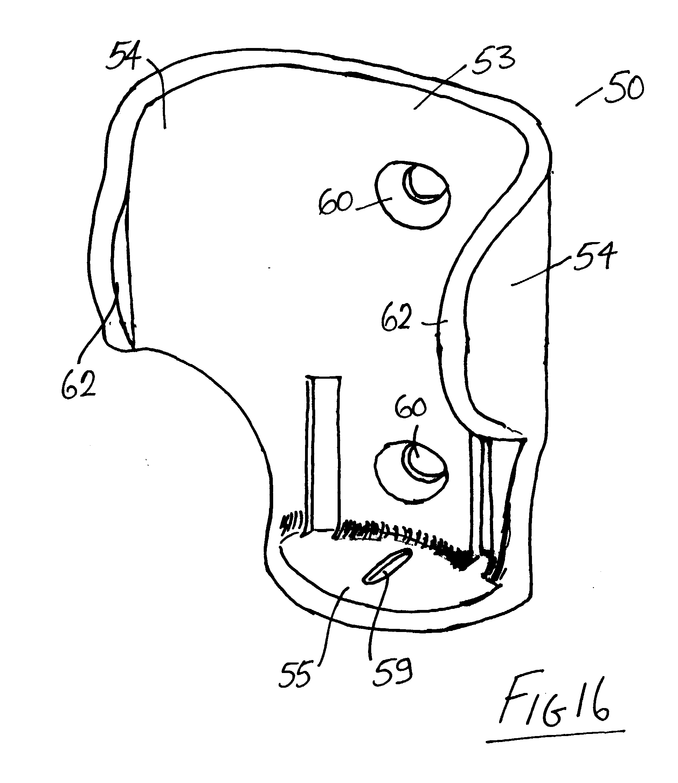

Referring to the drawings and initially to Figs. 1 to 14 thereof, there is illustrated a bottle holder according to the invention indicated generally by the reference numeral 1. The bottle holder comprises a cradle 2 having means for releasably holding a bottle 3 on the cradle 2 in a position ready for pick-up by a user and means for mounting the cradle 2 on a support surface such as a wall. A security cable 4 extends between the cradle 2 and bottle 3 to securely attach the bottle 3 to the cradle 2.

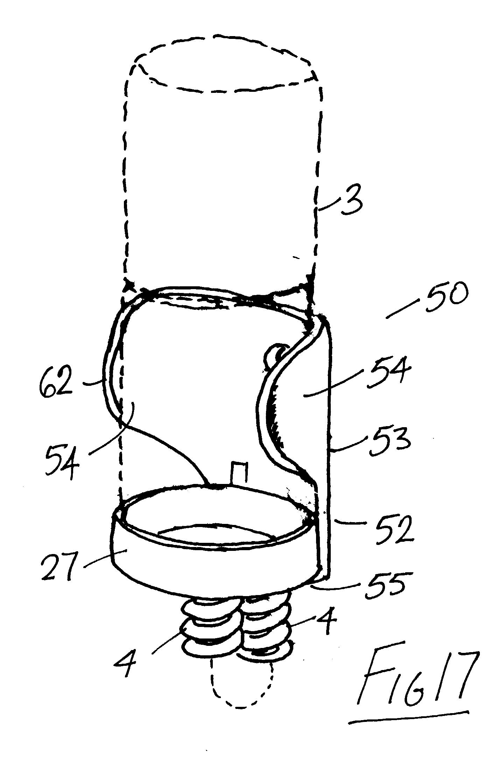

The cradle 2 has a body having a rear face 10 with through holes 12,13 for reception of fasteners such as screws or the like which can be used to secure the cradle 2 to a wall. An outwardly open niche or recess 15 is provided in the front of the body for reception and support of the bottle 3 in a generally upright position. As can be seen particularly in Figs. 1 and 3 the recess 15 is shaped to support the bottle 3 in an inclined position within the recess 15. The recess 15 is generally channel-shaped having arcuate side walls 16,17 to wrap about the bottle 3, the side walls 16,17 of the recess 15 extending outwardly about the sides of the bottle 3. An associated pair of finger notches 18,19 are provided in opposite side walls 16,17 of the recess 15 to facilitate gripping the bottle when it is mounted within the recess 15. A step 20 is provided at a bottom of the recess 15 on which the bottle is mounted. A notch 21 is cut out of the step 20 to accommodate the cable 4.

The cable 4 is of coiled construction to allow extension and has an inner end 25 attached to the cradle 2. An outer end 26 of the cable 4 is secured to an attachment cup 27 which engages a bottom of the bottle 3. The cup 27 is shown in more detail in Figs. 9 to 14 and has a circular base 28 with an upstanding side wall 29 defining a recess 30 for reception of a bottom end of the bottle 3. The cup 27 is of plastics material and is sized such that it is a push fit onto the bottom of the bottle 3, the side wall 29 deforming to accept the bottle 3. Thus the cup 27 tightly grips the bottle 3 to prevent unauthorised removal of the bottle 3. A number of spaced-apart inwardly projecting webs 32 on the base 28 support the bottom end of the bottle 3 above the base 28. A central opening 34 is provided in the base 28 for engagement of the cable 4 with the base 28. A key 36 projects downwardly at one side of the base 28 for complementary interengagement with an associated slot 37 in the step 20 for securely docking the cup 4 on the step 20 and securing the bottle 3 on the cradle 2.

Fig. 14 shows an upper rim 38 of the side wall 29 which has a slight lead-in taper 39 on an inner face of the side wall 29 at an upper end of the side wall 29 to facilitate engagement with the bottle 3.

In use, the bottle 3 is engaged in the cup 27 and the bottle 3 with cup 27 attached is mounted within the recess 15. The bottle 3 is thus held in a position ready for pick up by a user. The finger notches 18,19 allow a user to engage thumb and forefinger with the bottle 3 to facilitate picking up the bottle 3 and removing the bottle 3 from the cradle 2. The user then has the freedom to use the bottle 3 as desired for spraying liquid from the bottle 3 as required. After use the bottle 3 is again sat into the recess 15 with the key 36 engaging in the slot 37 when seating the cup 27 on the step 20.

Referring now to Figs. 15 to 19, there is illustrated another bottle holder according to a second embodiment of the invention, indicated generally by the reference numeral 50. Parts similar to those described previously are assigned the same reference numerals. The bottle holder 50 has a cradle 52 for reception of a liquid spray bottle 3 which is shown in broken outline in some of the drawings. In this case, the cradle 52 comprises a body 53 with a pair of forwardly extending bottle gripping arcuate arms 54 at each side of the body 53 to define an outwardly open recess in a front of the body 53 for reception and support of a spray bottle 3 in a generally upright position. The arms 54 are resiliently deformable for snap engagement of a spray bottle 3 therebetween, the arms 54 wrapping about the spray bottle 3. It will be noted that a front edge 62 of each arm 54 flares outwardly for guiding a spray bottle 3 into engagement between the arms 54 when mounting the spray bottle 3 between the arms 54.

At a lower end of the body 53 is an outwardly extending step 55 which is engageable with a bottom inner edge of the cup 27 to prevent downward slippage of the spray bottle 3 when engaged between the arms 54.

Each end of the security cable 4 has a fastener clip 56 with a pair of ears 57 which, when in alignment, can be pushed through associated attachment holes 58, 59 in the cup 27 and step 55 and then be bent outwardly apart as shown to retain the security cable 4 in engagement with the cup 27 and the cradle 52.

Countersunk through holes 60 are provided in the body 53 for screws or the like fasteners to secure the body 53 to a wall or the like support surface.

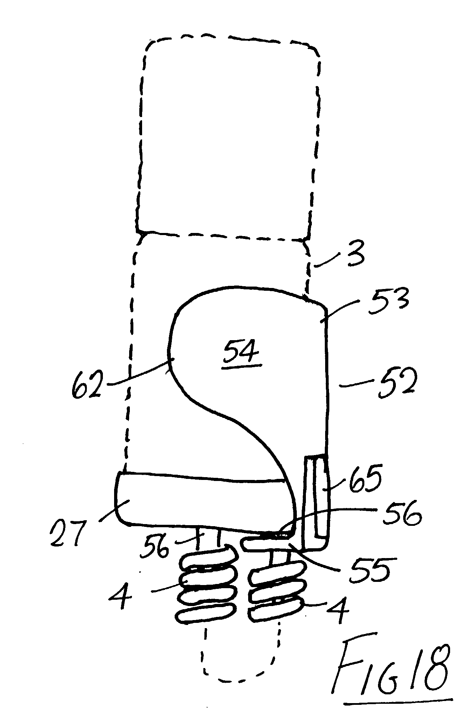

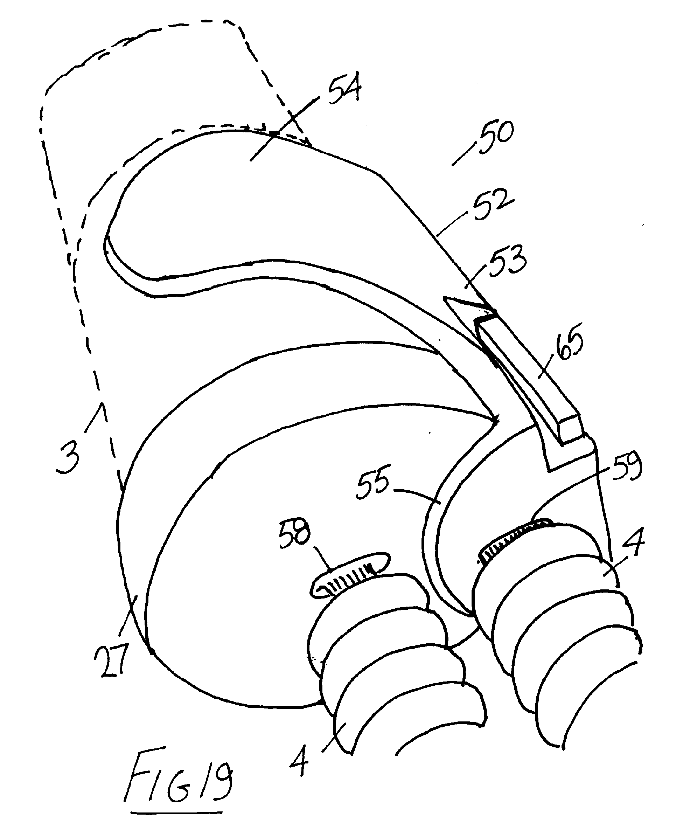

A pair of mounting lugs 65 (best seen in Figs. 18 and 19) are provided at a bottom of the body 53 at opposite sides of the body 53. These lugs 65 are slidably engageable with an associated mount (not shown) for releasably mounting the cradle 52 on a support. This is convenient for releasably mounting the cradle 52 on supports such as the handlebars of a bicycle or a belt, for example. The adapter is secured to the support in any suitable fashion. The adapter has complementary formations to receive and grip the lugs 65.

In use, a bottom of the spray bottle 3 is engaged with the cup 27 as previously described. The spray bottle 3 is then pushed into engagement between the arms 54 which grip opposite sides of the spray bottle 3 to support the spray bottle 3 in a generally upright position. The cup 27 rests against the step 55 at a lower end of the body 53 to prevent the spray bottle 3 sliding downwardly when engaged between the arms 54.

Instead of, or in addition to, the holes 60, a pair of hook and pile fastener strips may be provided for securing the cradle 52 to a support surface. One part of the hook and pile fastener would be attached to a rear face of the body 53 and a complementary second part of the hook and pile fastener would be attached to the support surface.

As an alternative to screws or hook and pile fastener strips, double-sided tape may be provided for securing a rear face of the body 53 to a support surface.

The invention is not limited to the embodiments hereinbefore described which may be varied in both construction and detail within the scope of the appended claims.

## Claims

1. A bottle holder (1) for mounting a liquid spray bottle (3) on a support surface, the holder (1) having means for reception of the spray bottle (3) and means for mounting the holder (1) on a support surface, characterised in that the holder (1) includes a cradle (2) having means for releasably holding the spray bottle (3) on the cradle (2) in a position ready for pick-up by a user, and the holder (1) has an elongate flexible security cable (4) having an inner end and an outer end, the inner end being connected to the cradle (2) and the outer end having means (27) for attachment of the security cable (4) to the bottle (3).

2. A bottle holder as claimed in claim 1, wherein the cradle has a body with an outwardly open recess in a front of the body for reception and support of a spray bottle in a generally upright position, said recess having arcuate sides for wrapping about the spray bottle, a step being provided at a bottom of the recess upon which the spray bottle stands when engaged with the cradle.

3. A bottle holder as claimed in claim 1, wherein the attachment means is a cup connected to the cable, the cup having a base with an upstanding side wall defining a recess for reception of a bottom of the bottle, the cup having locking means for releasably securing the bottle in engagement with the cup.

4. A bottle holder as claimed in claim 3, wherein the locking means is operable to clamp the bottle within the cup.

5. A bottle holder as claimed in claim 3 or claim 4, wherein the cup is sized such that it is a push fit into engagement with the bottle to clamp the bottle in the cup.

6. A bottle holder as claimed in claim 5, wherein one or both of the bottle and the cup are deformable for interengagement.

7. A bottle holder as claimed in any preceding claim, wherein the bottle holder is for mounting on a wall or other upright surface, and comprises a body having a rear face which is engageable with the wall, the body having an outwardly open recess in a front of the body for reception and support of the bottle in a generally upright position.

8. A bottle holder as claimed in claim 7, wherein the recess is shaped to support the bottle in an inclined position within the recess, the base of the bottle being supported outwardly of the top of the bottle to assist in retaining the bottle securely within the recess.

9. A bottle holder as claimed in any of claims 3 to 8, wherein complementary releasably interengageable formations are provided on the cup and within the recess for retaining the cup within the recess.

10. A bottle holder as claimed in claim 9, wherein the interengageable formations comprise a key on one of the cup or body and an associated slot in the other of the cup or body.

11. A bottle holder as claimed in claim 10, wherein the key is mounted on the cup and the slot is provided at a bottom of the recess in the body.

12. A bottle holder as claimed in any of claims 3 to 9, wherein the recess is of arcuate section to wrap about the bottle with side walls of the recess extending outwardly about the sides of the bottle, finger notches being provided in opposite side walls of the recess to facilitate gripping the bottle when it is mounted within the recess.

13. A bottle holder as claimed in claim 1, wherein the cradle has a body with a pair of spaced-apart forwardly extending arms defining an outwardly open recess in a front of the body for reception and support of a liquid spray bottle in a generally upright position, the arms for wrapping about the spray bottle, and an outwardly extending step beneath the arms upon which the spray bottle stands when engaged with the cradle.

14. A bottle holder as claimed in claim 13, wherein the arms are resiliently deformable to grip a liquid spray bottle therebetween.
